## Europäisches Patentamt
## European Patent Office
## Office européen des brevets

(19)

(11) Veröffentlichungsnummer: **0 016 429**
**B1**

(12) **EUROPÄISCHE PATENTSCHRIFT**

(45) Veröffentlichungstag der Patentschrift: **22.06.83**

(51) Int. Cl.³: **B 01 D 3/00, B 01 D 3/24**

(21) Anmeldenummer: **80101335.0**

(22) Anmeldetag: **14.03.80**

(54) **Rektifikationsapparat.**

(30) Priorität: **22.03.79 DE 2911214**

(43) Veröffentlichungstag der Anmeldung:
**01.10.80 Patentblatt 80/20**

(45) Bekanntmachung des Hinweises auf die Patenterteilung:
**22.06.83 Patentblatt 83/25**

(84) Benannte Vertragsstaaten:
**CH DE FR GB NL**

(56) Entgegenhaltungen:
**FR - A - 1 160 731**
**FR - A 1 349 760**
**FR - A - 1 388 560**
**GB - A - 987 121**
**GB - A - 1 467 472**
**US - A - 3 393 133**

(73) Patentinhaber: **HOECHST AKTIENGESELLSCHAFT**
**Postfach 80 03 20**
**D-6230 Frankfurt/Main 80 (DE)**

(72) Erfinder: **Mayer, Manfred, Dr.**
**Königsberger Strasse 8**
**D-6272 Niedernhausen/Taunus (DE)**
Erfinder: **Volz, Roland**
**Alt-Oberliederbach 12**
**D-6237 Liederbach (DE)**

Courier Press, Leamington Spa, England.

## Rektifikationsapparat

Die Erfindung bezieht sich auf einen Rektifikationsapparat in Modulbauweise mit Einbauten zum Verdampfen und Kondensieren sowie mit Leitorganen für die Flüssigkeit, in der der Druckverlust beim Trennen möglichst niedrig ist.

Temperaturempfindliche und/oder hochsiedende Stoffe, die durch Rektifikation thermisch getrennt werden sollen, müssen zur schonenden thermischen Behandlung meist unter Vakuum rektifiziert werden. Besondere Forderungen werden dann gestellt, wenn die Rektifikation unter Vakuum bei einem absoluten Druck von einigen mbar, also im Feinvakuumbereich erfolgen soll. Die Rektifikation wird in Kolonnen durchgeführt, bei denen die im Kondensator am Kopf der Kolonne niedergeschlagene und als Rücklauf in die Kolonne zurückgeführte Flüssigkeit mit dem am Boden der Kolonne in einem Verdampfer erzeugten und zum Kopf aufsteigenden Dampf im Gegenstrom zur Erzielung des erforderlichen Stoffaustausches geführt wird. Durch Kolonneneinbauten sollen pro m Bauhöhe eine möglichst hohe theoretische Trennstufenzahl erreicht werden, um eine möglichst hohe Trenneffektivität zu gewährleisten. Beim Durchströmen des Dampfes durch die Kolonne muß der Dampf den Widerstand der Einbauten und der daran herabfließenden Flüssigkeit überwinden, so daß sich am Kopf und Sumpf der Kolonne ein unterschiedlicher Druck einstellt. Dieser Druckverlust innerhalb der Kolonne steigt bei höherer Belastung stark an bis der Flutpunkt erreicht ist.

Es sind Kolonneneinbauten bekannt, mit deren Hilfe der Druckverlust pro theoretischer Trennstufe relativ niedrig gehalten werden kann. Diese Einbauten bestehen in der Regel aus Gewebepackungen, deren Aufbau so gestaltet ist, daß eine möglichst gleichmäßige Verteilung von Flüssigkeit und Dampf erreicht wird. Durch Verteiler in verschiedenen Höhen muß dabei die Flüssigkeit wieder gesammelt und neu verteilt werden. Trotz günstiger Anordnung und Aufbau der Packung tritt auch beim Einsatz derartiger Kolonnen ein nennenswerter Druckverlust pro theoretischer Trennstufe auf. Dieser Druckverlust kann bei niedrigst möglichem Kopfdruck zu einer Siedetemperatur im Sumpf führen, bei der temperaturempfindliche Stoffe bereits thermisch geschädigt, z.B. zersetzt werden. Eine Erniedrigung des Durchsatzes führt zwar zu einer Verminderung des Druckverlustes, kann aber bei geringem Durchsatz zu schlechter Verteilung und somit niedriger Trennleistung, insgesamt also zu einer unwirtschaftlichen Lösung des Rektifikationsproblems führen.

Daneben ist die Flüssigkeitsverteilung infolge hoher Oberflächenspannung ungenügend, wenn die Stoffgemische einen hohen Wasseranteil aufweisen, was sich sehr nachteilig auf die Trennleistung auswirkt. Wegen ihrer extrem großen Oberflächen ist die Korrosionsgefahr bei Gewebepackungen erheblich.

Es ist ferner ein Rektifikationsapparat bekannt, bei dem ein Dünnschichtverdampfer mit gekühltem Rotor ausgestattet ist, um den von der Heizwand abgehenden Dampf am Rotor zu kondensieren und das Kondensat zur Wiederverdampfung mit dem Rotor an die Heizwand zu schleudern. Diese apparative Variante eines Dünnschichtverdampfers hat mehrere Nachteile. Der Apparat kann nur als Abtriebssäule eingesetzt werden, hat eine begrenzte Trennstufenzahl von 2 bis 3 theoretischen Stufen und erfordert hohe Investitionskosten. Der entscheidende Nachteil dieser Konstruktion ist jedoch ein Durchschlagen der Dampfphase, d.h. durch die sehr großen Querschnitte, die dem durchströmenden Dampf bei kurzem geradlinigen Weg geboten werden, ist nur ein geringer Teil des Dampfes mit der Flüssigkeitsfläche in Kontakt, bzw. strömt ein Teil des Dampfes ungehindert aus dem Apparat ab. Er wird also am Rotor nicht niedergeschlagen.

Nach US—A—3 393 133 ist ein Rektifikationsapparat bekannt, der aus Modulen aufgebaut ist, die einen Verdampfer und ein Leitorgan für die Flüssigkeit enthalten und die um ein als Kondensator dienendes Wärmetauscherrohr in einem gemeinsamen Gehäuse angeordnet sind. Der entstehende Dampf wird sofort gekühlt, kondensiert und abgeleitet, so daß am Boden des Rektifikationsapparates ein Kondensat mit einer Mischkonzentration anfällt, die sich aus den Konzentrationen der Dämpfe von den einzelnen Verdampfermodulen ergibt.

Die Erfindung liegt demnach die Aufgabe zugrunde, einen Rektifikationsapparat mit hoher Trennstufenzahl unter weitgehender Vermeidung eines Druckverlustes zwischen Sumpf und Kopf zu schaffen.

Die Erfindung löst die Aufgabe durch einen Rektifikationsapparat in Modulbauweise mit Einbauten zum Verdampfen und Kondensieren sowie mit Leitorganen für die Flüssigkeit, die dadurch gekennzeichnet ist, daß jeder Modul folgende Merkmale aufweist:

a) Einen Verteilerkanal für die Flüssigkeit, der über dem oberen Rand eines konzentrisch um und trichterförmig in Richtung Modulachse geneigten Verdampfers angeordnet ist, wobei der Verdampfer über einem Leitorgan für die Flüssigkeit endet, das sich bis über den Verteilerkanal erstreckt;

b) ein Führungsorgan mit dem der Dampf zu einem darüber angeordneten Kondensator geleitet wird, der mit Ablaufeinrichtungen für das Kondensat versehen ist.

In einer Ausgestaltung weist der Verteilerkanal eine geschlitzte oder gezackte Überlaufeinrichtung auf. Der Verdampfer ist konzentrisch im Modul angeordnet, in Richtung der Modulachse abwärts geneigt und kann an seinem unteren Rand das Führungsorgan für den Dampf aufweisen, das sich bis zur Modulwand erstreckt. Der Kondensator kann konzentrisch über dem Verdampfer angeordnet sein, wobei die wirksamen Oberflächen von Verdampfer und Kondensator sich gegenüberstehen. Das Führungsorgan für den Dampf kann am unteren Ende des Verdampfers angeordnet, in Richtung Modulwand abwärts geneigt sein und sich bis dorthin erstrecken. Am oberen Rand des Kondensators ist das Leitorgan für die Flüssigkeit angeordnet, das über den Rand in Richtung Modulwand hinausragt und über dem Verteilerkanal endet. Das Leitorgan kann ebenfalls abwärts geneigt sein.

In einer alternativen Ausführung kann die Wand des Moduls als Kondensator ausgebildet sein. In diesem Fall kann das Führungsorgan für den Dampf gegebenenfalls über ein gekrümmtes Leitblech mit dem Kondensator vervunden sein. Das Leitorgan für die Flüssigkeit ist integrierter Teil dieses Führungsorgans und weist in den Verteilerkanal mündende Abflußrohre auf.

Der Verteilerkanal kann am oberen Rand des Verdampfers verstellbar angeordnet sein. Der Verdampfer kann zwischen 10° und 80°, bevorzugt zwischen 30° und 60° in Bezug auf die Modulachse geneigt sein. Durch die Modulbauweise ist es möglich, den Rektifikationsapparat den jeweiligen Erfordernissen entsprechend aufzubauen.

Mit dem erfindungsgemäßen Apparat wird während der Rektifikation durch Verdampfung und Kondensation der abströmenden Flüssigkeit und des aufströmenden Dampfes fortwährend für einen intensiven Stoffaustausch gesorgt, so daß nur ein geringer Teil des Dampfes durch den gesamten Apparat strömen muß, der bei konventionellen Kolonnen mit Sumpfverdampfer und Kopfkondensator notwendig wäre, um die geforderte Trennwirkung zu erreichen. Der für die erforderliche Rektifikationswirkung notwendige Rückfluß und die dadurch entsprechend große Dampfmenge muß also bei konventionellen Kolonnen vom Sumpf bis zum Kopfkondensator geführt werden und verursacht einen entsprechend großen Druckverlust. In der erfindungsgemäßen Vorrichtung wird der zum Stoffaustausch notwendige Rückfluß durch Kondensation und Wiederverdampfung über die gesamte Höhe des Apparates verteilt. Die Flüssigkeit läuft über heizbare Flächen ab; dabei wird ein Teil der Flüssigkeit verdampft. Der aufsteigende Dampf wird an Kondensationsflächen niedergeschlagen und das Kondensat wieder auf den Verdampfer geleitet.

Im folgenden wird die Erfindung anhand von lediglich beispielsweise Ausführungen darstellenden Zeichnungen näher erläutert.

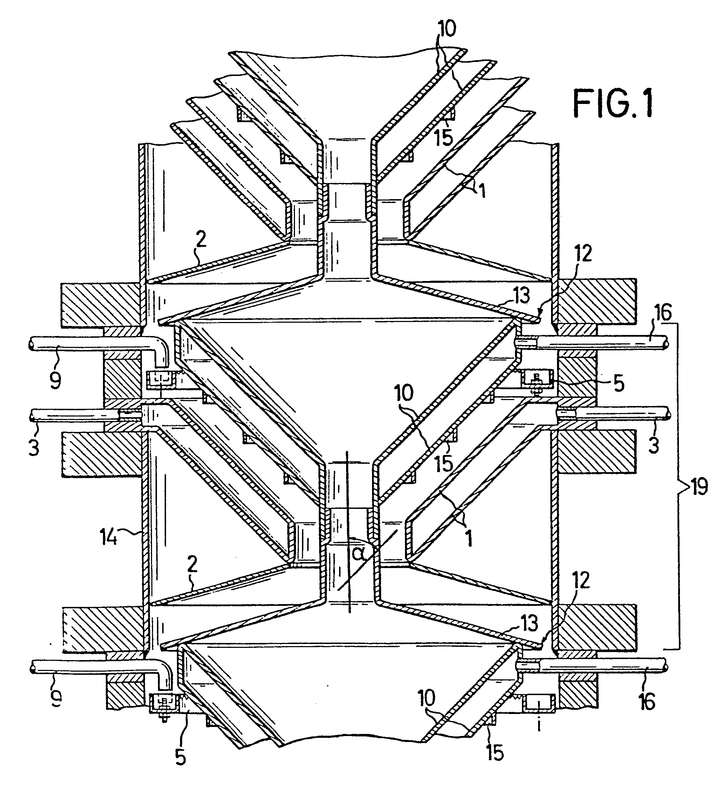

Es zeigt Figur 1 einen Modul eines Rektifikationsapparats im Zusammenwirken mit seinen benachbarten Modulen.

Figur 2 zeigt eine alternative Konstruktion des Moduls gemäß Figur 1.

Figur 3 zeigt einen Ausschnitt des Verteilerkanals.

Figur 4 zeigt einenbeispielsweisen Rektifikationsapparat schematisch dargestellt.

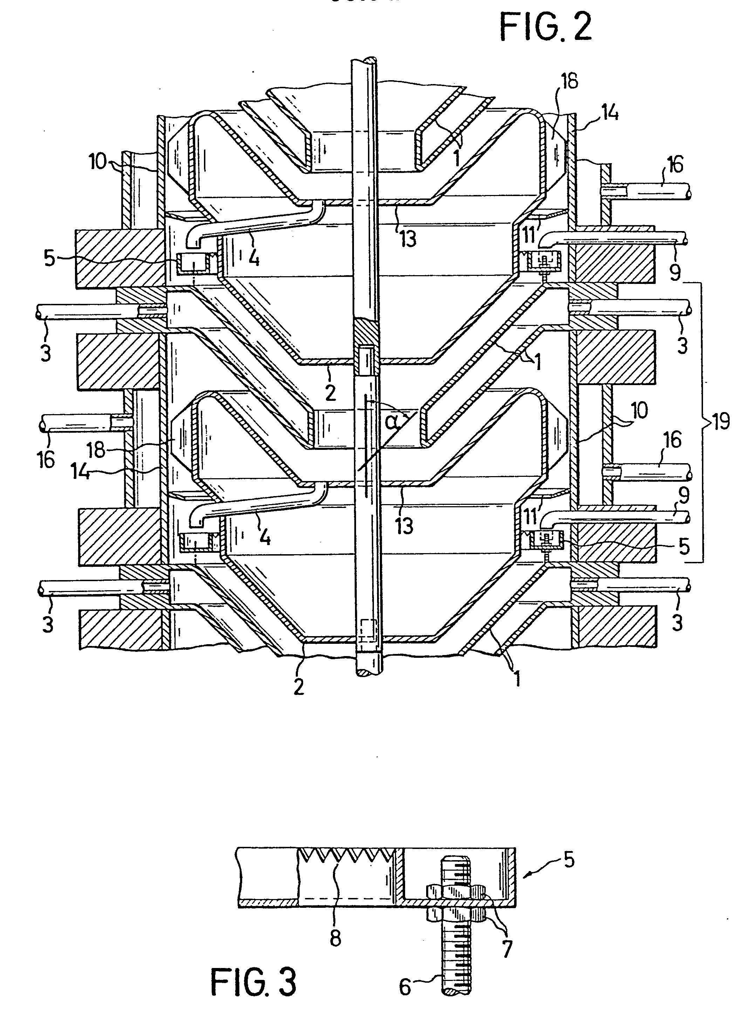

Der Rektifikationsapparat ist aus einzelnen Modulen (19) oder Stufen aufgebaut. Jeder Modul (19) weist einen Verdampfer (1), einen Kondensator (10), einen Verteilerkanal (5), ein Führungsorgan (2) für den Dampf, ein Leitorgan (13) für die Flüssigkeit und Ablaufeinrichtung (11) für das Kondensat auf. Der Verdampfer (1) ist konzentrisch im Modul (19) angeordnet und mit Zuführungen (3) für Heizmittel versehen. Der Verdampfer (1) ist gegen die Modulachse um den Winkel $\alpha$ geneigt. Der Winkel $\alpha$ kann zwischen 10° und 80°, vorzugsweise 30° und 60° betragen. Der Verdampfer (1) bildet also eine Art Trichter für die Flüssigkeit, die über den Verteilerkanal (5) dem Verdampfer möglichst als Film zugeführt wird. Der Verteilerkanal (5) ist am oberen Rand des Verdampfers mit Verstelleinrichtung (6), z.B. Gewindebolzen mit Stellmuttern (7), befestigt. Der dem Verdampfer (1) zugewandte Rand des Verteilerkanals (5) ist als Überlaufeinrichtung (8), vorzugsweise gezackt oder geschlitzt, ausgebildet. Der Verteilerkanal (5) ist mit einer Leitung (9) zum Zuleiten bzw. Entnehmen von Flüssigkeit versehen. Die vom Verdampfer (1) ablaufende Flüssigkeit gelangt auf das Leitorgan (13) und von dort gegebenenfalls über Abflußrohr (4) (Figur 2) in den Verteilerkanal (5) des folgenden Moduls (19). Das Leitorgan (13) kann am Kondensator (10) befestigt sein. Im Falle einer konischen Fläche, wie in Figur 1 gezeigt, ist es am Rand mit einer Ablaufnase (12) versehen. Der Kondensator (10) ist oberhalb, parallel oder annähernd parallel zum Verdampfer (1) angeordnet. Sein Abstand zur Heizfläche kann ca. 20 bis 50 mm betragen. Der vom Verdampfer aufsteigende Dampf kann somit direkt nach kurzer Wegstrecke kondensiert werden. Das gebildete Kondensat tropft auf den darunter angeordneten Verdampfer wieder zurück. Um ein Ablaufen des Kondensats auf den schrägen Kondensatorflächen zu vermeiden, sind im Abstand von ca. 50 mm Abtropfeinrichtung (15) vorgesehen. Der vom unteren Modul aufsteigende Dampf, geleitet durch das Führungsorgan (2), das am unteren Rand des Verdampfers (1) angeordnet ist, und sich bis zur Modulwand (14) erstreckt, tritt in den zwischen Kondensator (10) und Verdampfer (1) gebildeten Raum und kann am Kondensator zum Teil niedergeschlagen werden. Leitung (16) dient der Zu- bzw. Abfuhr von Kühlmittel.

Bei einer Alternativkonstruktion (Figur 2) ist die Wand (14) des Moduls (19) als Kondensator (10) ausgebildet, der am unteren Ende mit einer Ablaufeinrichtung (11) für das Kondensat versehen ist, die in den Verteilerkanal (5) des folgenden Moduls mündet. Das Führungsorgan (2) für den Dampf kann mit einem gekrümmten Leitblech (18) versehen und über dasselbe mit dem Kondensator (10) verbunden sein.

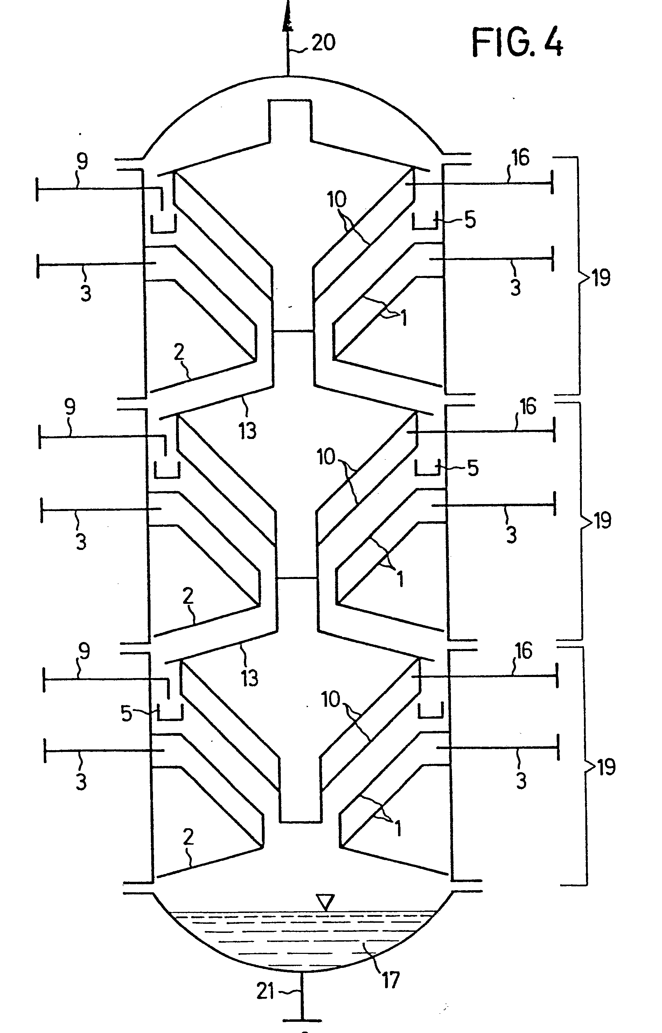

In Figur 4 ist ein Rektifikationsapparat bestehend aus beispielsweise 3 Modulen (19) dargestellt. Der Dampf wird über Leitungen (20) entnommen und gegebenenfalls einer nicht gezeigten Kondensation zugeführt. Ebenfalls nicht gezeigt ist die Einrichtung zum Evakuieren. Die Flüssigkeit kann über Leitung (21) entnommen werden. Im Sumpf (17) kann gegebenenfalls ein Sumpfkocher (nicht dargestellt) angeordnet sein. Je Modul (19) lassen sich 1 bis 3 theoretische Trennstufen verwirklichen mit einem Durckverlust von 0,03 bis 0,07 mbar pro theoretischer Trennstufe bei einem Systemdruck von ca. 2 mbar. Die Durchsatzleistung ist dabei vergleichbar mit der, die in einer Kolonne mit Gewebepackung einem Druckverlust von 0,7 mbar pro theoretischer Trennstufe verursacht.

Die Vorrichtung nach Figur 2 sollte in der Regel für Trennprobleme mit hoher Flüssigkeitsbeladung oder großen Dampfmengen, relativ niedriger geforderter Trennstufenzahl, die Vorrichtung nach Figur 1 bei hoher Trennstufenzahl aber niedriger Kopfdampfmenge eingesetzt werden. Die Vorteile niedrigen Druckverlustes bei Verwendung der erfindungsgemäßen Vorrichtung werden noch dadurch erhöht, daß es ohne wesentlichen Aufwand, z.B. üblicherweise Einbau von aufwendigen Flüssigkeitssammlern und -verteilern, möglich ist, in jeden Modul separat einzuspeisen und Produkt über einen zweiten Abzug zu entnehmen. Durch die Anzahl der Module kann das erfindungsgemäße Verfahren dem speziellen Trennproblem an gepaßt werden, wobei die einzelnen Module gleich sind und deshalb als Serienteile kostengünstif hergestellt werden können.

Bei der diskontinuierlichen Rektifikation kann entsprechend der Abnahme an Leichtsieder die Einspeisestelle in einfacher Weise auf andere Modulen geschaltet werden, so daß der Rektifikationsapparat fortlaufend dem Konzentrationsverlauf im Sumpf angepaßt und optimal genutzt werden kann.

**Patentansprüche**

1. Rektifikationsapparat in Modulbauweise mit Einbauten zum Verdampfen und Kondensieren sowie mit Leitorganen für die Flüssigkeit, dadurch gekennzeichnet daß jeder Modul (19) aufweist:

a) einen Verteilerkanal (5) für die Flüssigkeit, der über dem oberen Rand eines konzentrisch um und trichterförmig in Richtung Modulachse geneigten Verdampfers (1) angeordnet ist, der über einem Leitorgan (13) für die Flüssigkeit endet, das sich bis über den Verteilerkanal (5) erstreckt,

b) ein Führungsorgan (2), mit dem der Dampf zu einem darüber angeordneten Kondensator (10) geleitet wird, der mit Ablaufeinrichtungen (11, 15) für das Kondensat versehen ist.

2. Rektifikationsapparat nach Anspruch 1, dadurch gekennzeichnet, daß

a) der Verteilerkanal (5) für die Flüssigkeit eine Überlaufeinrichtung (8) aufweist,

b) der Verdampfer (1) an seinem unteren Rand das Führungsorgan (2) für den Dampf aufweist, das sich abwärts neigend bis zur Wand (14) des Moduls (19) erstreckt,

c) über der Fläche des Verdampfers (1) der Kondensator (10) angeordnet ist, dessen oberer Rand das in den Verteilerkanal mündende und in Richtung Modulwand abwärts geneigte Leitorgan (13) für die Flüssigkeit trägt, und

d) die dem Verdampfer (1) zugewandte Oberfläche des Kondensators (10) mit den Ablaufeinrichtung (15) für das Kondensat versehen ist.

3. Rektifikationsapparat nach Anspruch 1, dadurch gekennzeichnet, daß

a) der Verteilerkanal (5) für die Flüssigkeit eine Überlaufeinrichtung (8) aufweist,

b) der Verdampfer (1) über einem und in Richtung Modulachse abwärts geneigten Leitorgan (13) endet, das mit Abflußrohren (4) versehen ist, die in den darunterliegenden Verteilerkanal (5) münden,

c) die Wand (14) des Moduls als Kondensator (10) ausgebildet ist, der oberhalb des Verteilerkanals (5) mit einer Konzentrisch angeordneten Ablaufeinrichtung (11) versehen ist, die in den Verteilerkanal (5) mündet,

d) das Führungsorgan (2) für den Dampf über und parallel zur Fläche des Verdampfers (1), sowie parallel zum Kondensator (10) angeordnet ist.

4. Rektifikationsapparat nach den Ansprüchen 1 bis 3, dadurch gekennzeichnet, daß der Verteilerkanal (5) verstellbar über dem oberen Rand des Verdampfers (1) angeordnet ist.

5. Rektifikationsapparat nach den Ansprüchen 1 bis 4, dadurch gekennzeichnet, daß der Verdampfer (1) zwischen 10° und 80°, vorzugsweise zwischen 30° und 60° gegen die Modulachse geneigt angeordnet ist.

6. Rektifikationsapparat nach den Ansprüchen 1 bis 4, dadurch gekennzeichnet, daß die Uberlaufeinrichtung (8) des Verteilerkanals (5) ein geschlitztes oder gezacktes Überlaufwehr ist.

7. Rektifikationsapparat nach Anspruch 3, dadurch gekennzeichnet, daß das Führungsorgan (2) für den Dampf im Bereich des Kondensators (10) ein gekrümmtes Leitblech (18) aufweist.

8. Rektifikationsapparat nach Anspruch 7, dadurch gekennzeichnet, daß das Führungsorgan (2) für den Dampf über das gekrümmte Leitblech (18) mit dem Kondensator (10) verbunden ist.

## Revendications

1. Appareil de rectification de construction modulaire, comprenant des éléments intérieurs de vaporisation et de condensation ainsi que des organes de guidage du liquide, caractérisé en ce que chaque module (19) présente:

a) un conduit répartiteur (5) du liquide, conduit qui est disposé au-dessus du bord supérieur d'un vaporisateur (1) concentrique à l'axe du module et incliné en forme d'entonnoir dans la direction de cet axe, et dont l'extrémité se trouve au-dessus d'un organe de guidage (13) du liquide, organe qui s'étend jusqu'au dessus du conduit répartiteur (5).

b) un organe de guidage (2) qui guide la vapeur vers un condenseur (10) disposé au-dessus et pourvu de dispositifs d'écoulement (11, 15) pour le liquide de condensation.

2. Appareil de rectification selon la revendication 1, caractérisé en ce que

a) le conduit répartiteur (5) du liquide possède un trop-plein (8),

b) le vaporisateur (1) possède, à son bord inférieur, l'organe de guidage (2) de la vapeur, organe qui s'étend obliquement vers le bas jusqu'à la paroi (14) du module (19),

c) le condenseur (10) est disposé au-dessus de la surface du vaporisateur (1), son bord supérieur portant l'organe de guidage (13) du liquide, qui débouche dans le conduit répartiteur et est incliné vers le bas en direction de la paroi du module, et en ce que

d) la surface du condenseur (10) tournée vers la vaporisateur (1) est pourvue des dispositifs d'écoulement (15) du liquide de condensation.

3. Appareil de rectification selon la revendication 1, caractérisé en ce que

a) le conduit répartiteur (5) du liquide possède un trop-plein (8),

b) le vaporisateur (1) a son extrémité au-dessus d'un organe de guidage (13) incliné vers le bas en direction de l'axe du module, cet organe de guidage (13) étant pourvu de tuyaux d'écoulement (4) qui débouchent dans le conduit répartiteur (5) qui se trouve au-dessous,

c) la paroi (14) du module constitue un condenseur (10) pourvu, au-dessus du conduit répartiteur (5), d'un dispositif d'écoulement (11) disposé concentriquement et débouchant dans le conduit répartiteur (5),

d) l'organe de guidage (2) de la vapeur est disposé au-dessus de la surface du vaporisateur (1) et parallèlement à celle-ci ainsi qu'au condensateur (10).

4. Appareil de rectification selon les revendications 1 à 3, caractérisé en ce que le conduit répartiteur (5) est disposé au-dessus du bord supérieur du vaporisateur (1) de façon à pouvoir être déplacé.

5. Appareil de rectification selon les revendications 1 à 4, caractérisé en ce que le vaporisateur (1) est incliné de 10 à 80° par rapport à l'axe du module, de préférence de 30 à 60°.

6. Appareil de rectification selon les revendications 1 à 4, caractérisé en ce que le trop-plein (8) du conduit répartiteur (5) est un déversoir fendu ou dentelé.

7. Appareil de rectification selon la revendication 3, caractérisé en ce que l'organe de guidage (2) de la vapeur possède, à proximité du condenseur (10), une tôle de guidage cintrée (18).

8. Appareil de rectification selon la revendication 7, caractérisé en ce que l'organe de guidage (2) de la vapeur est relié au condenseur (10) par la tôle de guidage cintrée (18).

## Claims

1. Rectifier containing installations for evaporation and condensation as well as guiding means for the fluid, which is constructed on the basis of individual modules (19), each module (19) comprising

a) a distributor channel (5) for the liquid positioned above the upper rim of an evaporator (1) arranged concentrically in the module and inclined in the direction of the module axis, the evaporator ending above a guide element (13) for the liquid which extends to the distributor channel (5);

b) a guide element (2) for guiding the vapor to a condenser (10) which is arranged above guide element (2) and which is provided with drain elements (11, 15) for the condensate.

2. Rectifier as claimed in claim 1, wherein

a) the distributor channel (5) for the liquid is provided with an overflow device (8);

b) the evaporator (1) is provided at its lower rim with a guide element (2) for the vapor inclining and extending to the wall (14) of module (19);

c) above the surface of the evaporator (1), the condenser (10) is arranged carrying at its upper rim the guide element (13) for the liquid inclining in the direction of the wall (14) of module (19) and leading into the distributor channel (5);

d) the surface of the condenser (10) facing the evaporator (1) is provided with drain elements (15) for the condensate.

3. Rectifier as claimed in claim 1, wherein

a) the distributor channel (5) for the liquid is provided with an overflow device (8);

b) the evaporator (1) ends over a guide element (13) which is inclined in the direction of the module axis and provided with drain pipes (4) ending in the distributor channel (5) positioned below;

c) the wall (14) of the module is constructed as condenser (10) provided above the distributor channel (5) with a concentrically arranged drain element (11) ending in the distributor channel (5);

d) the guide element (2) for the vapor is arranged above and parallelly to the surface of the evaporator (1), as well as parallelly to the condenser (10), and below the next evaporator (1).

4. Rectifier as claimed in claims 1 to 3, wherein the distributor channel (5) is in an adjustable position above the rim of the evaporator (1).

5. Rectifier as claimed in claims 1 to 4, wherein the evaporator (1) is inclined towards the module axis at an angle of from 10° to 80°, preferably 30° to 60°.

6. Rectifier as claimed in claims 1 to 4, wherein the overflow device (8) of the distributor channel (5) is constructed as a slotted or serrated overflow weir.

7. Rectifier as claimed in claim 3, wherein the guide element (2) for the vapor is provided with a curved baffle plate (18) in the area of the condenser (10).

8. Rectifier as claimed in claim 7, wherein the guide element (2) for the vapor is connected with the condenser (10) via the curved baffle plate (18).

FIG.1

FIG. 2

FIG. 3

0 016 429

FIG. 4